# EUROPÄISCHE PATENTANMELDUNG

(11) **EP 2 275 677 A2**
(43) Veröffentlichungstag der Anmeldung: **19.01.2011**
(21) Anmeldenummer: 10005004.6
(22) Anmeldetag: 12.05.2010
(51) Int. Cl.: F03D 11/00, F03D 11/04

(54) **Vorrichtung zur Reduzierung von Eislasten an einer Pfahlgründung für eine Offschore-Windenergieanlage**

(30) Priorität: 18.07.2009 DE 102009033708
(71) Anmelder: Nordex Energy GmbH, 22848 Norderstedt (DE)
(72) Erfinder: Herraez, Ivan, 22335 Hamburg (DE)
(74) Vertreter: Hauck Patent- und Rechtsanwälte

(57) **Zusammenfassung**

Vorrichtung zur Reduzierung von Eislasten an einer Pfahlgründung für eine Offshore-Windenergieanlage, wobei
- eine konusförmige Strebenkonstruktion (14), die an der Pfahlgründung (10) angebracht ist und teilweise in die Wasserlinie (12) eintaucht, wobei der oberhalb der Wasserlinie befindliche Teil der Strebenkonstruktion einen anderen Durchmesser als der unterhalb der Wasserlinie befindliche Teil aufweist, und
- die Strebenkonstruktion sich über die gesamte Höhe der Strebenkonstruktion erstreckende Längsstreben aufweist (16), die mit der Pfahlgründung verbunden sind.

## Beschreibung

Die vorliegende Erfindung betrifft eine Vorrichtung zur Reduzierung von Eislasten an einer Pfahlgründung für eine Offshore-Windenergieanlage.

Die Dimensionierung von Pfahlgründungen für Offshore-Windenergieanlagen muss sich neben der an der Pfahlgründung angreifenden Wind- und Wellenlast auch mit der Eislast an der Pfahlgründung auseinandersetzen. Hierbei sind je nach Standort verschiedene Arten von Eislasten zu unterscheiden. In arktischen Gewässern ist bei der Eislast zu berücksichtigen, dass die Pfahlgründung durch Eisschollen oder Eisberge getroffen werden kann, die einen erheblichen Impuls auf die Pfahlgründung übertragen können. Neben dem Kollisionsrisiko können in anderen Standorten, beispielsweise in der Ostsee, als kritische Belastung geschlossene oder beinahe geschlossene Eisflächen auftreten. In diesem Fall ist nicht nur der Impulsübertrag aus dem Zusammenstoß bei der Auslegung der Pfahlgründung zu berücksichtigen, sondern auch die Schwingungsanregung der Pfahlgründung durch die Eisfläche.

Aus WO 03/001009 A1 ist eine meerestechnische Tragkonstruktion bekannt, bei der oberhalb des Fundaments an dem Turm eine schlanke Fachwerkkonstruktion vorgesehen ist, welche aus Stützen und Verstrebungen besteht, zwischen denen Wasser und Luft durchströmen können. Die Fachwerkkonstruktion besitzt eine dreieckigen Querschnitt und ist besonders zum Abtragen von Wind- und Wellenlasten, nicht aber im Hinblick auf Eislasten ausgelegt.

Aus WO 2006/004417 A1 ist eine Pfahlgründung für eine Offshore-Windenergieanlage bekannt, bei der der Mast der Windenergieanlage aus einer am Meeresboden verankerten Strebenkonstruktion und einem rohrförmigen Mast besteht. Die Strebenkonstruktion reicht hierbei vom Meeresgrund ausgehend über die Wasserlinie hinaus. Eine besondere Auslegung für Eislasten ist bei der Strebenkonstruktion nicht vorgesehen.

Aus einer Diplomarbeit von Cornelia Ehlert von der Bauhaus Universität Weimar, "Ermittlung von Dämpfungsparametern für die Simulation nichtlinearer Federbedingungen für Offshore Pfahlgründen", sind die angreifenden Kräfte an einem kreisförmigen Pfahl bekannt, der in einer geschlossenen Eisdecke steht.

Aus einem Artikel von N.-E. Ottesen Hanse et. al., "Engineering Practice for Ice Force Design in Denmark", Paper POAC Nr. 135 ist bekannt, einen sogenannten Eiskonus zur Reduzierung von Eislasten an Windenergieanlagen einzusetzen. Der Artikel beschreibt Offshore-Windenergieanlagen, die mit einem Eiskonus ausgestattet sind, dessen geschlossene Mantelfläche in die Wasserlinie eintaucht und sich nach oben hin verjüngt. Ebenfalls ist die Verwendung eines inversen Eiskonus bekannt, dessen Durchmesser oberhalb der Wasserlinie größer ist als unterhalb der Wasserlinie.

Aus einem Artikel von Arkadiusz Mróz et. al., "Mitigation of Ice Loading on OffShore Wind Turbines Feasibility Study of a Semi-Active Solution", veröffentlicht im Tagungsband zur II. Eccomas Thematic Conference on Smart Structures and Materials, Lisbon, Portugal, July 18-21, 2005, ist bekannt, einen Eiskonus einzusetzen, der sich oberhalb der Wasserlinie verjüngt.

Der Erfindung liegt die Aufgabe zugrunde, eine Vorrichtung zur Reduzierung von Eislasten an einer Pfahlgründung für eine Offshore-Windenergieanlage bereitzustellen, die mit einfachen Mitteln eine Eislast an der Pfahlgründung reduziert und zugleich die angreifende Wellen- und Windlast für die Pfahlgründung nicht erhöht.

Erfindungsgemäß wird die Aufgabe durch eine Vorrichtung mit den Merkmalen aus Anspruch 1 gelöst. Vorteilhafte Ausgestaltungen bilden den Gegenstand der Unteransprüche.

Die erfindungsgemäße Vorrichtung dient zur Reduzierung von Eislasten an einer Pfahlgründung für eine Offshore-Windenergieanlage. Grundsätzlich kann sie an jeder Art von Pfahlgründung in einem Gewässer eingesetzt werden. Die Vorrichtung besteht aus einer konusförmigen Strebenkonstruktion, die an der Pfahlgründung angebracht ist und in die Wasserlinie eintaucht. Die konusförmige Strebenkonstruktion ist dabei so montiert, das der oberhalb der Wasserlinie befindliche Teil einen anderen Durchmesser als der unterhalb der Wasserlinie befindliche Teil aufweist. Dies bedeutet, dass der Konus sich von der Wasserlinie fort hin zu einem Kopf der Pfahlgründung in seinem Durchmesser entweder erweitert oder verjüngt. Die Strebenkonstruktion ist über Querstreben mit der Pfahlgründung verbunden und besitzt Längsstreben, die sich über die gesamte Höhe der Strebenkonstruktion erstrecken. Die Längsstreben verleihen der Pfahlgründung eine ausreichende Steifigkeit, so dass die über die Querstreben an die Pfahlgründung angebundene Strebenkonstruktion den angreifenden Eislasten einen ausreichenden Widerstand entgegensetzt. Durch die Ausbildung als Strebenkonstruktion wird zugleich sichergestellt, dass durch den Eiskonus die Wind- und Wellenlast für die Pfahlgründung nicht zusätzlich erhöht wird.

Die erfindungsgemäße Vorrichtung beruht auf der Einsicht, dass eine konusförmige Strebenkonstruktion, die für Wind und Wellen durchlässig ist, einen ausreichenden Eisschutz bietet, ohne gleichzeitig die Wind- und Wellenlast für die Pfahlgründung zu erhöhen. Die mit dem Öffnungswinkel des Konus verlaufenden Längsstreben der Gitterkonstruktion bieten dabei den Vorteil, dass eine angreifende Eislast, insbesondere die Eislast einer geschlossenen Eisdecke, reduziert wird, indem das Eis unter die Wasserlinie gedrückt oder aus dem Wasser angehoben wird und dabei brechen kann.

In einer bevorzugten Ausgestaltung sind wenigstens einige der Längsstreben jeweils über mindestens eine Querstrebe mit der Pfahlgründung verbunden. Hierbei ist es möglich, dass eine Längsstrebe über mehrere Querstreben mit der Pfahlgründung verbunden ist. Auch können nur einige der Längsstreben mit der Pfahlgründung verbunden sein, alternativ ist es auch möglich, dass jede der Längsstreben mit der Pfahlgründung verbunden ist.

Zusätzlich oder alternativ können die Längsstreben auch über elastische Elemente mit der Pfahlgründung verbunden sein. Ein elastisches Element kann dabei je nach Ausgestaltung in sich plastisch verformbar sein und/oder elastisch in eine bestimmte Position zwischen Pfahlgründung und Längsstrebe vorgespannt sein. Durch die elastische Ausgestaltung können auftretende Impulse an dem elastischen Element besser abgefangen und gedämpft werden. Auch Schwingungsanregungen können durch Auslegung der Eigenschwingung der elastischen Elemente besser gedämpft werden.

In einer weiteren bevorzugten Ausgestaltung können die mit der Pfahlgründung verbundenen Längsstreben über mindestens einen Reifen miteinander verbunden sein. Der Reifen verbindet dabei Längsstreben miteinander, die selbst wiederum über mindestens eine Querstrebe mit der Pfahlgründung verbunden sind. Die Reifen können dabei eine geschlossene runde Form besitzen oder aus Kreissegmenten mit einzelnen Streben zusammengesetzt sein. Auch ist es möglich den Reifen aus Umfangsstreben aufzubauen, die an ihren Enden mit den Längsstreben verbunden sind. Der aus Umfangsstreben aufgebaute Reifen besitzt eine polygonale Form, wobei die Längsstreben in den Ecken des Polygons mit den Umfangsstreben verbunden sind.

In einer bevorzugten Ausgestaltung sind die Längsstreben, die über ein elastisches Element mit der Pfahlgründung verbunden sind, zusätzlich über mindestens eine Querstrebe mit der Pfahlgründung verbunden. Hierbei können die Querstrebe und das elastische Element in räumlich auseinander liegenden Punkten mit der Pfahlgründung verbunden sein. Auch können das elastische Element und die Querstrebe in weit auseinander liegenden Punkten mit der Längsstrebe verbunden sein.

In einer bevorzugten Ausgestaltung sind das elastische Element und die Querstrebe in einem gemeinsamen Punkt mit der Längstrebe oder der Pfahlgründung verbunden. Ein solches elastisches Element ist dann nicht plastisch verformbar sondern durch das elastische Element wird die Querstrebe in eine definierte Position relativ zu der Pfahlgründung vorgespannt.

Bevorzugt sind die Längsstreben in wenigstens einigen ihrer Verbindungspunkte zu den Querstreben und/oder zu den elastischen Elementen jeweils mit einem Gelenk ausgestattet. Die Gelenke in den Verbindungspunkten erlauben es, dass die Strebenkonstruktion sich unter einer angreifenden Kraft verformen und in ihrer Position relativ zu der Pfahlgründung verstellen kann.

In einer bevorzugten Ausgestaltung ist das elastische Element als eine gelenkig mit der Längsstrebe verbundene Querstrebe und ein Federelement ausgebildet, das die Querstrebe in eine vordefinierte Position relativ zu der Pfahlgründung stellt. Angreifende Kräfte beispielsweise aus dem Aufprall einer Eisscholle oder einer kontinuierlich drückenden Eisschicht bewirken, dass die Längsstrebe ihren Neigungswinkel gegen die Kraft des Federelements ändert und so die Pfahlgründung vor der Eislast schützt.

Die Anzahl der Längstreben in der Strebenkonstruktion ist grundsätzlich so zu bestimmen, dass die Strebenkonstruktion eine ausreichende Steifigkeit aufweist. Versuche haben ergeben, dass auch bei einem Winkelabstand von weniger als 23° eine gute Reduktion der Wind- und Wellenlast erzielt werden kann.

In einer möglichen Ausgestaltung besitzt der oberhalb der Wasserlinie befindliche Teil der konusförmigen Strebenkonstruktion einen größeren Durchmesser als der unterhalb der Wasserlinie befindliche Teil. Es handelt sich also bei der Strebenkonstruktion um einen auf dem Kopf stehenden Konus, einen sogenannten inversen Konus.

Neben der Ausgestaltung des auf dem Kopf stehenden Eiskonus ist auch eine Anordnung des Konus relativ zu der Pfahlgründung möglich, bei der der Durchmesser unterhalb der Wasserlinie größer als der Durchmesser oberhalb der Wasserlinie ist.

Die Erfindung wird nachfolgend anhand von zwei Ausführungsbeispielen näher erläutert. Es zeigt:
- Fig. 1: eine schematische Ansicht eines invers angeordneten Eiskonus und
- Fig. 2: die Anbindung eines inversen Eiskonus über eine Querstrebe und ein Federelement an einem Pfahl.

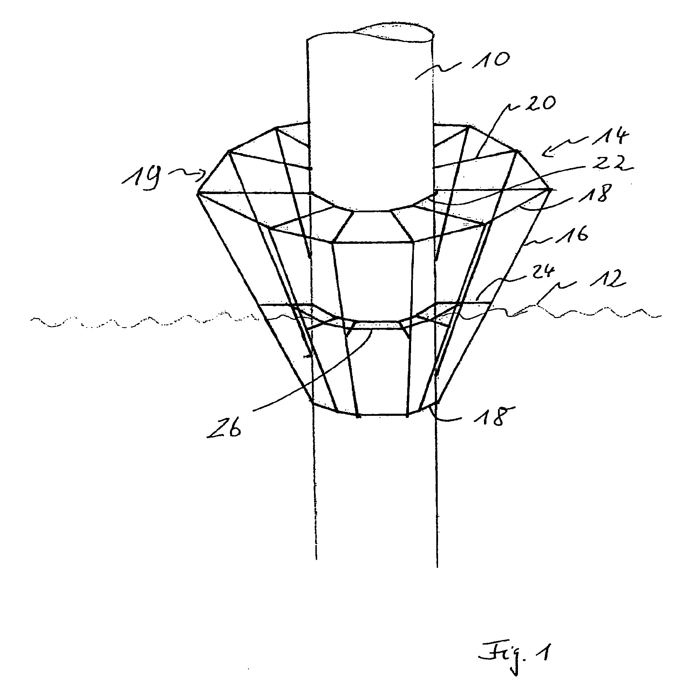

Fig. 1 zeigt den Ausschnitt eines Mastes 10 für eine Offshore-Windenergieanlage im Bereich der Wasserlinie 12. Der Mast 10 ist in nicht näher dargestellter Weise am Meeresgrund verankert. Oberhalb der Wasserlinie 12 trägt der Mast das Maschinenhaus (nicht dargestellt) der Windenergieanlage. Im Bereich der Wasserlinie ist der Mast 10 mit einer Strebenkonstruktion 14 ausgestattet, die im Bereich oberhalb der Wasserlinie einen größeren Durchmesser als unterhalb der Wasserlinie besitzt. Die Strebenkonstruktion 14 besteht aus Längsstreben 16, die über Umfangsstreben 18 miteinander verbunden sind. In Fig. 1 ist zu erkennen, dass ein Satz von Umfangsstreben 18 einen oberen Reifen 19 bildet, der oberhalb der Wasserlinie 12 angeordnet ist. Ein zweiter Satz von Umfangsstreben 18 ist unterhalb der Wasserlinie 12 direkt am Mast 10 vorgesehen.

Am oberen Ende der Strebenkonstruktion sind die Umfangsstreben 18 und die Enden der Längsstreben 16 über Querstreben 20 mit dem Mast 10 verbunden. Die Querstreben 20 werden über kürzere Umfangsstreben 22 direkt am Mast 10 gehalten. Bei dem in Fig. 1 dargestellten Ausführungsbeispiel sind die kürzeren Umfangsstreben 22 direkt mit dem Mast 10 verbunden.
Fig. 1 zeigt ferner, dass im Bereich der Wasserlinie 12, bzw. leicht oberhalb der Wasserlinie 12 zusätzliche mittlere Querstreben 24 vorgesehen sind, die die Längsstreben 16 gegenüber dem Mast 10 abstützen. Die mittleren Querstreben 24 sind wiederum untereinander über Versteifungsstreben 26 miteinander verbunden. Die mittleren Querstreben 24 mit den Versteifungsstreben 26 stabilisieren die Stegkonstruktion zusätzlich in dem Bereich, in dem die Haupteislast angreift. Die Versteifungsstreben 26 sind hierbei innerhalb des durch die Längsstreben 16 gebildeten Konus angeordnet.

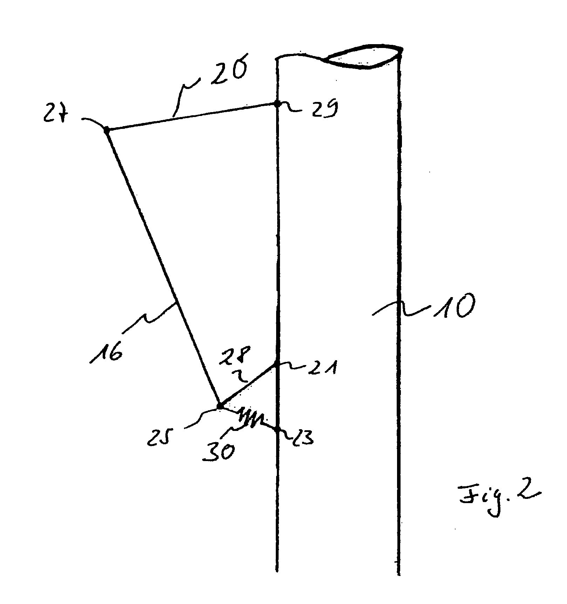

Fig. 2 zeigt einen Ausschnitt der Stegkonstruktion in einer alternativen Ausgestaltung. In dieser Ausgestaltung ist wieder eine Längsstrebe 16 derart zu dem Mast 10 angeordnet, dass mit zunehmender Höhe oberhalb der Wasserlinie der Abstand der Längsstrebe 16 von dem Mast 10 zunimmt. Die Längsstrebe 16 ist an ihrem unterhalb der Wasserlinie 12 befindlichen Ende über eine kurze Querstrebe 28 und ein zugehöriges Federelement 30 mit dem Mast 10 verbunden. Das oberhalb der Wasserlinie befindliche Ende der Längsstrebe 16 ist über eine Querstrebe 20 direkt mit dem Mast 10 verbunden. Das Federelement 30 im Zusammenspiel mit der kurzen Querstrebe 28 bewirkt, dass die Strebenkonstruktion und die Längsstrebe 16 sich bei einer angreifenden Eislast neigen kann, so dass eine geschlossene Eisdecke besser gebrochen werden kann und die angreifenden Kräfte nicht in den Mast geleitet werden. Um die über das Federelement 30 angebundene Strebenkonstruktion in sich flexibel zu machen, sind Gelenke 21, 23, 25, 27 und 29 in den Verbindungen zwischen den Streben vorgesehen. Durch die Gelenke 21 und 23 wird der untere Teil der Strebenkonstruktion gelenkig an dem Pfahl angebunden, wobei das Gelenk 21 die kurze Querstrebe 28 und das Gelenk 23 das Federelement 30 mit dem Pfahl verbindet. Die kurze Querstrebe 28 und Federelement 30 sind über das Gelenk 25 mit der Längsstrebe 16 verbunden. Das obere aus der Wasserlinie hervorstehende Ende der Längsstrebe 16 ist über das Gelenk 27 mit der Querstrebe 20 verbunden, die wiederum über das Gelenk 29 mit dem Pfahl verbunden ist. Neben der in Fig. 2 dargestellten Ausgestaltung, in der sämtliche Streben über Gelenke miteinander verbunden sind, ist es auch möglich, nur Teile der Streben über Gelenkverbindungen untereinander zu verbinden. Auch ist es möglich, einzelne Gelenkstreben über Gelenke mit dem Turm zu verbinden, während andere Längsstreben nicht über Gelenke mit dem Turm verbunden sind.

Die Strebenkonstruktionen gemäß Fig. 1 und 2 schaffen wie herkömmliche Eiskonen, wie sie beispielsweise für Ölplattformen oder auch Bojen verwendet werden, eine effektive Reduzierung der angreifenden Eislast. Im Gegensatz zu herkömmlichen Eiskonen jedoch, können Wellen und Wind durch die Strebenkonstruktion hindurch treten, so dass die entsprechenden Lasten für den Turm nicht spürbar erhöht werden.

Als Material für die Strebenkonstruktion wird bevorzugt Stahl eingesetzt, andere metallische Materialien, wie beispielsweise Aluminium, sind gegebenenfalls auch in Kombination mit Stahl möglich. Für die Verbindung der einzelnen Streben untereinander werden bevorzugt Bolzen mit entsprechenden Strebenverbindungselementen eingesetzt, wobei die Streben dann mit den Strebenverbindungselementen verschraubt oder vernietet sind. Auch ist es möglich, die Streben direkt miteinander zu verschrauben oder zu vernieten. Auch können, bei Verwendung eines geeigneten Metallmaterials die Streben miteinander verschweißt sein. Die Außenfläche der Strebenkonstruktion sollte nach Möglichkeit nur am oberen oder unteren Ende der Strebenkonstruktion horizontale Querstreben besitzen. Wenn Querstreben vorgesehen sind, wie beispielsweise die mittleren Querstreben 24, so sind diese bevorzugt hinter den Längsstreben, also innerhalb der Strebenkonstruktion eingesetzt. Zusätzlich zu den in Fig. 1 dargestellten Streben können weitere Streben vorgesehen werden, um der gesamten Konstruktion weiterhin ausreichende Steifigkeit zu verleihen.

## Patentansprüche

1. Vorrichtung zur Reduzierung von Eislasten an einer Pfahlgründung für eine Offshore-Windenergieanlage, **gekennzeichnet durch**
- eine konusförmige Strebenkonstruktion (14), die an der Pfahlgründung (10) angebracht ist und teilweise in die Wasserlinie (12) eintaucht, wobei der oberhalb der Wasserlinie befindliche Teil der Strebenkonstruktion einen anderen Durchmesser als der unterhalb der Wasserlinie befindliche Teil aufweist, und
- die Strebenkonstruktion sich über die gesamte Höhe der Strebenkonstruktion erstreckende Längsstreben (16) aufweist, die mit der Pfahlgründung verbunden sind.

2. Vorrichtung nach Anspruch 1, **dadurch gekennzeichnet, dass** wenigstens einige der Längsstreben jeweils über mindestens eine Querstrebe mit der Pfahlgründung verbunden ist.

3. Vorrichtung nach Anspruch 1 oder 2, **dadurch gekennzeichnet, dass** wenigstens einige der Längsstreben über mindestens ein elastisches Element mit der Pfahlgründung verbunden ist.

4. Vorrichtung nach Anspruch 2, **dadurch gekennzeichnet, dass** die über mindestens eine Querstrebe mit der Pfahlgründung verbundenen Längsstreben über mindestens einen Reifen miteinander verbunden sind.

5. Vorrichtung nach Anspruch 4, **dadurch gekennzeichnet, dass** der Reifen Umfangsstreben aufweist, die an ihren Enden jeweils mit einer Längsstrebe verbunden sind.

6. Vorrichtung nach Anspruch 3, **dadurch gekennzeichnet, dass** die über ein elastisches Element mit der Pfahlgründung verbundenen Längsstreben zusätzlich über mindestens eine Querstrebe mit der Pfahlgründung verbunden sind.

7. Vorrichtung nach Anspruch 6, **dadurch gekennzeichnet, dass** das elastische Element und die Querstrebe in einem gemeinsamen Punkt mit der Längsstrebe oder der Pfahlgründung verbunden sind.

8. Vorrichtung nach Anspruch 6 oder 7, **dadurch gekennzeichnet, dass** die Längsstreben in wenigstens einem Teil ihrer Verbindungspunkte zu den Querstreben und/oder zu den elastischen Elementen jeweils ein Gelenk aufweisen.

9. Vorrichtung nach einem der Ansprüche 6 bis 8, **dadurch gekennzeichnet, dass** das elastische Element eine gelenkig mit der Längsstrebe verbundene Querstrebe und ein Federelement aufweist, das die Querstrebe in eine vordefinierte Position relativ zu der Pfahlgründung stellt.

10. Vorrichtung nach einem der Ansprüche 1 bis 9, **dadurch gekennzeichnet, dass** die Längsstreben entlang dem Umfang der Strebenkonstruktion einen Winkelabstand von weniger als 23° aufweisen.

11. Vorrichtung nach einem der Ansprüche 1 bis 10, **dadurch gekennzeichnet, dass** die Strebenkonstruktion oberhalb der Wasserlinie einen größeren Radius besitzt als unterhalb der Wasserlinie.

12. Vorrichtung nach einem der Ansprüche 1 bis 10, **dadurch gekennzeichnet, dass** die Strebenkonstruktion unterhalb der Wasserlinie einen größeren Radius besitzt als oberhalb der Wasserlinie.
